# EUROPEAN PATENT APPLICATION

(11) **EP 4 600 391 A1**
(43) Date of publication of application: **13.08.2025**
(21) Application number: 24796646.8
(22) Date of filing: 21.03.2024
(51) Int. Cl.: C22B 26/12, B01J 20/06, B01J 41/00, B01J 49/00, C01D 15/04, C02F 1/28, C22B 3/20, C22B 3/24, C22B 3/44

(54) **METHOD FOR PRODUCING LITHIUM-CONTAINING SOLUTION**

(30) Priority: 24.04.2023 JP 2023070962
(71) Applicant: SUMITOMO METAL MINING CO., LTD., Tokyo 105-8716 (JP)
(72) Inventor: TAKANO, Masatoshi, Niihama-shi, Ehime 792-0002 (JP); MATSUMOTO, Shin-ya, Niihama-shi, Ehime 792-0002 (JP); ASANO, Satoshi, Tokyo 105-8716 (JP); WATANABE, Hiroto, Niihama-shi, Ehime 792-0002 (JP)
(74) Representative: Jones, Nicholas Andrew
(86) International application number: PCT/JP2024/010965
(87) International publication number: WO 2024/224888

(57) **Abstract**

Provided is a method for producing a lithium-containing solution that allows suppressing production cost for lithium production by suppressing solution amount after an adsorption step, increasing a lithium content rate in the lithium-containing solution, and suppressing amount of solution used in a step after a manganese oxidation step. The method for producing a lithium-containing solution performs the adsorption step, an eluting step, and an manganese oxidation step in this order. In the adsorption step, an anion-exchange resin is used together with the lithium adsorbent. This aspect allows hydrogen ions generated in the adsorption step to be adsorbed by the anion-exchange resin, thereby promoting an adsorption reaction. Therefore, the solution amount after the adsorption step can be suppressed, the lithium content rate in the lithium-containing solution increases, the amount of the solution used in the step after the manganese oxidation step is suppressed. This allows suppressing production cost for lithium production.

## Description

### BACKGROUND

### 1. Technical Field

The present invention relates to a method for producing a lithium-containing solution. More particularly, the present invention relates to a method for producing a lithium-containing solution that allows suppressing production cost for lithium production by increasing adsorption efficiency in an adsorption step, increasing a content rate of lithium in a solution after an eluting step, and suppressing an amount of the solution used in a step after the eluting step.

### 2. Related Art

λ-MnO₂ having a spinel type structure (such as HMn₂O₄, H_{1.33}Mn_{1.67}O₄, or H_{1.6}Mn_{1.6}O₄) obtained by bringing lithium manganese oxide (such as LiMn₂O₄, Li_{1.33}Mn_{1.67}O₄, or Li_{1.6}Mn_{1.6}O₄) in contact with mineral acid such as hydrochloric acid is known to selectively adsorb lithium. The λ-MnO₂ is one of adsorbents of interest in Direct Lithium Extraction (DLE) technology. The use of the λ-MnO₂ for a lithium recovery has an advantage that usage amount of a neutralizer can be significantly reduced in the lithium recovery because the λ-MnO₂ does not adsorb impurities. Therefore, commercial use of this method is expected. The method for producing a lithium-containing solution using λ-MnO₂ is disclosed in Patent Literature 1.

The method for producing a lithium-containing solution in Patent Literature 1 includes an adsorption step, an eluting step, and a manganese oxidation step. The method adds acid to the total amount of eluted solution obtained in the eluting step as an acid-containing solution used in the eluting step, and adjusts the hydrogen ion concentration of the acid-containing solution, thus suppressing amount of the eluted solution used in a step after the eluting step.

### Citation List

### Patent Literature

Patent Literature 1: WO 2022/210847

### SUMMARY

A reaction of a lithium adsorbent (for example, H_{1.6}Mn_{1.6}O₄) obtained from lithium manganese oxide with lithium chloride is illustrated in Formula 1. This reaction is a reversible reaction. The reaction proceeds to the right when pH is high, and the reaction proceeds to the left when pH is low. In other words, when salt lake brine or the like containing lithium ions is brought into contact with the lithium adsorbent obtained from the lithium manganese oxide at a high pH, the lithium adsorbent adsorbs lithium to become the lithium manganese oxide (an adsorption step), and when the acid is brought into contact again, the lithium ions are eluted into an aqueous solution, and return to the lithium adsorbent (eluting step). Although the reaction with lithium chloride is illustrated in Formula 1, the same chemical reaction occurs with other types of lithium salts such as lithium sulfate.

[Formula 1] 1.6LiCl + H_{1.6}Mn_{1.6}O₄ ↔ 1.6HCl + Li_{1.6}Mn_{1.6}O₄

When lithium is adsorbed using the lithium adsorbent derived from the lithium manganese oxide, the pH of the solution in the adsorption step decreases due to the formation of acid corresponding to an amount of the adsorbed lithium simultaneously with the adsorption of lithium. The chemical reaction of the adsorption of lithium has a problem that the reaction of Formula 1 becomes less likely to proceed to the right as the pH decreases, and once the pH decreases to a certain value, the adsorption reaction does not occur.

In order to deal with the above-described problem, when a method that adds a liquid alkaline-neutralizing agent, such as a sodium hydroxide aqueous solution, during the lithium adsorption is adopted, there is a problem of the increased liquid amount after the adsorption step. In addition, the lithium adsorbent may be used as particulate bodies with binder, for example. This binder is degraded by strong alkali such as sodium hydroxide, and its binding capacity may decrease, causing the particulate bodies to disintegrate in some cases.

In view of the above-described circumstances, an object of the present invention is to provide a method for producing a lithium-containing solution that allows suppressing production cost for lithium production by suppressing the solution amount after the adsorption step, increasing the lithium content rate in the lithium-containing solution obtained through the adsorption step, the eluting step, and the manganese oxidation step, and suppressing the amount of solution used in the step after the manganese oxidation step.

### SOLUTIONS TO THE PROBLEMS

A method for producing a lithium-containing solution of a first invention includes an adsorption step of bringing a low concentration lithium-containing solution into contact with a lithium adsorbent obtained from lithium manganese oxide to obtain post-adsorption lithium manganese oxide, an eluting step of bringing the post-adsorption lithium manganese oxide into contact with an acid-containing solution to obtain an eluted solution, and a manganese oxidation step of oxidating manganese by adding an oxidant and a pH adjuster to the eluted solution to obtain a lithium-containing solution with a suppressed manganese concentration. The adsorption step, the eluting step, and the manganese oxidation step are performed in this order. In the adsorption step, an anion-exchange resin is used together with the lithium adsorbent.

In the method for producing a lithium-containing solution of a second invention, which is in the first invention, a weight ratio of the anion-exchange resin to the lithium adsorbent is 0.5 or more and 2.5 or less.

In the method for producing a lithium-containing solution of a third invention, which is in the first invention or the second invention, the lithium adsorbent constitutes particulate bodies, and the particulate body contains binder.

In the method for producing a lithium-containing solution of a fourth invention, which is in any one of the first invention to the third invention, after the eluting step, a regeneration step is provided to return a functional group of the anion-exchange resin to a form of hydroxy group thereof, and the anion-exchange resin having undergone the regeneration step is used in the adsorption step.

### EFFECTS OF THE INVENTION

According to the first invention, the use of the anion-exchange resin together with the lithium adsorbent in the adsorption step allows the hydrogen ions generated in the adsorption step to be adsorbed by the anion-exchange resin, thus maintaining the high pH level in the adsorption step without the use of any additional alkaline-neutralizing agent, thereby promoting the adsorption reaction. Therefore, since the solution amount the after the adsorption step is allowed to be suppressed, the lithium content rate in the lithium-containing solution obtained through the adsorption step, the eluting step, and the manganese oxidation step increases, thus suppressing the amount of the solution used in the step after the manganese oxidation step. This allows suppressing the production cost for lithium production.

According to the second invention, the weight ratio of the anion-exchange resin to the lithium adsorbent is 0.5 or more and 2.5 or less, which allows the pH in the adsorption step to remain high while suppressing the amount of the anion-exchange resin.

According to the third invention, even when the lithium adsorbent constitutes particulate bodies and the particulate body contains binder, the anion-exchange resin is used together with the lithium adsorbent in the adsorption step. Thus, the binder degradation is allowed to be suppressed and the life of the particulate bodies can be extended.

According to the fourth invention, after the eluting step, a regeneration step is provided to return the functional group of the anion-exchange resin to the form of the hydroxy group, and the anion-exchange resin that has undergone the regeneration step is used in the adsorption step, thereby allowing the suppressed cost increase due to the use of the anion-exchange resin.

### BRIEF DESCRIPTION OF DRAWINGS

Fig. 1 is a flow chart of a method for producing a lithium-containing solution according to a first embodiment of the present invention;
Fig. 2 is a flow chart of a method for producing a lithium-containing solution according to a second embodiment of the present invention;
Fig. 3 is a graph illustrating relationships between mixing and stirring times and pHs; and
Fig. 4 is a graph illustrating relationship between mixing and stirring times and lithium adsorbed amounts.

### DETAILED DESCRIPTION

Next, the embodiments of the present invention are described below based on the drawings. However, the following embodiments illustrate examples of methods for producing lithium-containing solution for realization of the technical idea of the present invention, and thus the present invention does not intend to limit the method for producing lithium-containing solution to the following method.

The method for producing a lithium-containing solution according to the present invention includes an adsorption step of bringing a low concentration lithium-containing solution into contact with a lithium adsorbent obtained from lithium manganese oxide to obtain post-adsorption lithium manganese oxide, an eluting step of bringing the post-adsorption lithium manganese oxide into contact with an acid-containing solution to obtain an eluted solution, and a manganese oxidation step of oxidating manganese by adding an oxidant and a pH adjuster to the eluted solution to obtain a lithium-containing solution with a suppressed manganese concentration. The adsorption step, the eluting step, and the manganese oxidation step are performed in this order. In the adsorption step, an anion-exchange resin is used together with the lithium adsorbent.

Since the use of the anion-exchange resin together with the lithium adsorbent in the adsorption step allows the hydrogen ions generated in the adsorption step to be adsorbed by the anion-exchange resin, the pH in the adsorption step can be maintained at a high level without using an additional alkaline-neutralizing agent, thus promoting the adsorption reaction. Therefore, since the solution amount after the adsorption step is allowed to be suppressed, the lithium content rate in the lithium-containing solution obtained through the adsorption step, the eluting step, and the manganese oxidation step increases, the amount of the solution used in the step after the manganese oxidation step is suppressed. This allows suppressing the production cost for lithium production.

The weight ratio of the anion-exchange resin to the lithium adsorbent is preferably to be 0.5 or more and 2.5 or less. This aspect allows the pH in the adsorption step to be maintained at a high level while suppressing the amount of the anion-exchange resin.

It is also preferred that the lithium adsorbent constitutes particulate bodies and the particulate body contains a binder. Even when the lithium adsorbent constitutes the particulate bodies and the particulate body contains the binder, the anion-exchange resin is used together with the lithium adsorbent in the adsorption step. Thus, the binder degradation is allowed to be suppressed and the life of the particulate bodies can be extended.

It is also preferred that after the eluting step, a regeneration step is provided to return the functional group of the anion-exchange resin to the form of the hydroxy group, and the anion-exchange resin that has undergone the regeneration step is used in the adsorption step. This aspect allows suppressing the increase in cost due to the use of the anion-exchange resin.

### (First Embodiment)

### (Preceding Stage of the Adsorption Step)

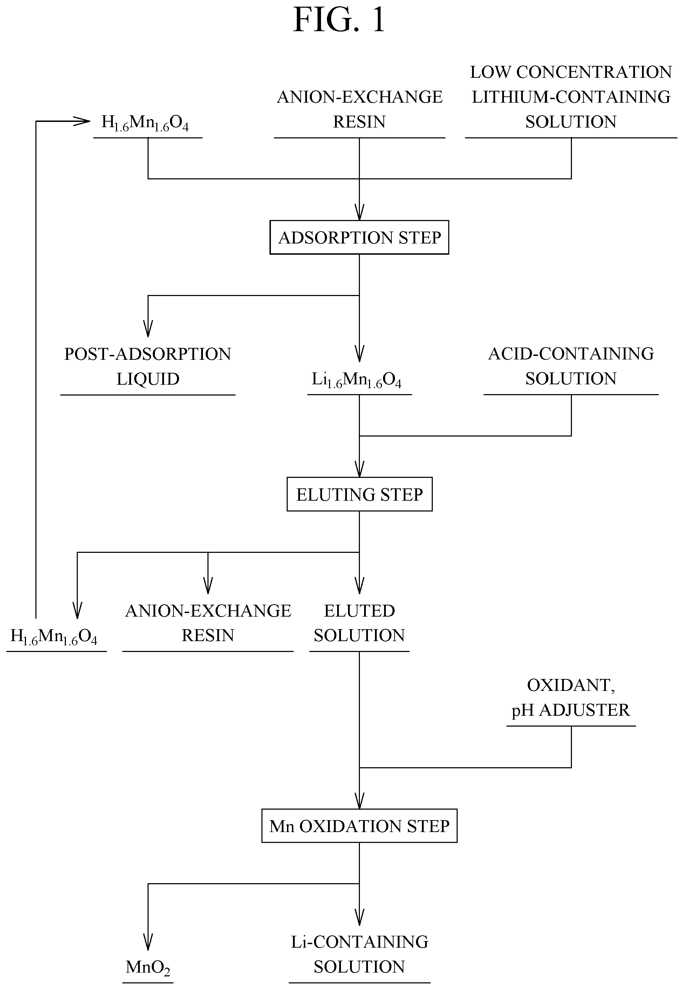

In the adsorption step, a low concentration lithium-containing solution is brought into contact with the lithium adsorbent to obtain the post-adsorption lithium manganese oxide, and the method of obtaining the lithium adsorbent used in the adsorption step is described. Fig. 1 illustrates a flow chart of the method for producing a lithium-containing solution according to the first embodiment of the invention, and the description of the "preceding stage of the adsorption step" is the stage in which H_{1.6}Mn_{1.6}O₄ is obtained, which is the topmost step in Fig. 1.

The lithium manganese oxide becomes the lithium adsorbent by being subjected to acid treatment as illustrated in Formula 2. In Formula 2, the lithium manganese oxide is expressed as Li_{1.6}Mn_{1.6}O₄, but the lithium manganese oxide is not limited thereto. For example, Li_{1.33}Mn_{1.67}O₄ can be used. In other words, when the lithium manganese oxide is Li_{1.6}Mn_{1.6}O₄, the lithium adsorbent is H_{1.6}Mn_{1.6}O₄, but when the lithium manganese oxide is, for example, Li_{1.33}Mn_{1.67}O₄, the lithium adsorbent is H_{1.33}Mn_{1.67}O₄. The acid used for the acid treatment is HCl, but it is not limited thereto. For example, sulfuric acid and nitric acid can also be used.

A shape of the lithium manganese oxide becomes a form that takes the adsorption of lithium into account in the adsorption step. For example, the shape of the lithium manganese oxide can be various forms, such as powder form, particle form produced by granulating the powder, or column form sprayed on fibers of column. When the acid treatment is performed, for example, H_{1.6}Mn_{1.6}O₄ is obtained as the lithium adsorbent. A shape of the lithium adsorbent is the same as the shape of the lithium manganese oxide before the acid treatment.

[Formula 2] Li_{1.6}Mn_{1.6}O₄ + 1.6HCl → H_{1.6}Mn_{1.6}O₄ + 1.6LiCl

### (Adsorption step)

Fig. 1 illustrates a flow chart of the method for producing a lithium-containing solution according to the first embodiment of the present invention. In the adsorption step, the low concentration lithium-containing solution is brought into contact with the lithium adsorbent to obtain the post-adsorption lithium manganese oxide through the ion-exchange reaction between H and Li as illustrated in Formula 3. In this description, the lithium manganese oxide obtained in the adsorption step is sometimes referred to as a post-adsorption lithium manganese oxide.

[Formula 3] H_{1.6}Mn_{1.6}O₄ + 1.6LiCl → Li_{1.6}Mn_{1.6}O₄ + 1.6HCl

The low concentration lithium-containing solution is, for example, seawater or salt lake brine. For example, the seawater contains an average of 0.17 ppm lithium. However, in addition to lithium, other elements such as sodium, magnesium, or calcium are dissolved in these low concentration lithium-containing solutions. According to the method for producing a lithium-containing solution of the present invention, it is possible to selectively recover lithium from the low concentration lithium-containing solution in which these elements are dissolved. For the low concentration lithium-containing solution, it means that the lithium amount per unit volume is lower than that of the lithium-containing solution described below.

In the adsorption step, the method of contact between the low concentration lithium-containing solution and the adsorbent differs depending on the shape of the adsorbent. For example, when the adsorbent is in a form of powder, one method is to put a predetermined amount of the adsorbent into the low concentration lithium-containing solution and stir it for a predetermined time. This causes the low concentration lithium-containing solution and the adsorbent to come into contact, and lithium is adsorbed on the adsorbent. When the adsorbent has particulate bodies, one method is to seal the particulate adsorbent in a container for liquid passage and causes the low concentration lithium-containing solution to pass therethrough. Thus, the low concentration lithium-containing solution and the adsorbent come into contact, and lithium is adsorbed on the adsorbent. When the adsorbent is sprayed on the fibers of the column, one method is to cause the low concentration lithium-containing solution to pass through the column and cause the low concentration lithium-containing solution to come into contact with the adsorbent, and lithium is adsorbed on the adsorbent. When the low concentration lithium-containing solution passes therethrough, the solution may pass therethrough repeatedly to ensure the number of times it contacts the adsorbent.

In the adsorption step of this embodiment, the anion-exchange resin is used together with the lithium adsorbent. The anion-exchange resin is a type of synthetic resin having a structure that ionizes as an ion-exchange group in part of a molecular structure thereof, and the ion-exchange group has an anionic property. The anion-exchange resins are classified into weakly basic anion-exchange resins with primary to tertiary amino groups as functional groups and strongly basic anion-exchange resins with quaternary ammonium groups as functional groups, but either type of the anion-exchange resins can be used. In the case of the weakly basic anion-exchange resins, that is, the anion-exchange resin with the primary amino groups, the secondary amino groups, and the tertiary amino groups, the hydrogen ions are adsorbed from the solution in the adsorption step according to the reaction equation represented by Formula 4, Formula 5, and Formula 6, respectively. In the case of the strongly basic anion-exchange resins, that is, the anion-exchange resin with the quaternary ammonium groups, the hydrogen ions are adsorbed from the solution in the adsorption step according to the reaction equation represented by Formula 7. In each of the reaction formulae, hydrochloric acid is described as the acid, but it is not limited thereto. For example, another acid such as sulfuric acid also reacts in the same way. R indicated in each of the reaction formulae is a carbon skeleton consisting of carbons bonded together with hydrogen, nitrogen, oxygen, and the like.

[Formula 4] R-NH₂ + HCl → R-NH₂·HCl

[Formula 5] R₂-NH + HCl → R₂-NH·HCl

[Formula 6] R₃-N + HCl → R₃-N·HCl

[Formula 7] R₄-NOH + HCl → R₄-NCl + H₂O

Since the anion-exchange resin is used together with the lithium adsorbent in the adsorption step, the hydrogen ions generated in the adsorption step are adsorbed by the anion-exchange resin. Thus, the pH in the adsorption step can be maintained at the high level without using an additional alkaline-neutralizing agent, and the adsorption reaction is promoted. Therefore, the solution amount after the adsorption step is allowed to be suppressed, which increases the lithium content rate in the lithium-containing solution obtained through the adsorption step, the eluting step, and the manganese oxidation step. Thus, the solution amount used in the step after the manganese oxidation step is suppressed. This allows suppressing the production cost for lithium production.

How the anion-exchange resin is used may vary depending on the shape of the lithium adsorbent or the method of contact with the low concentration lithium-containing solution. For example, when the shape of the lithium adsorbent is in a form of powder, a predetermined amount of the adsorbent and a predetermined amount of the anion-exchange resin are placed in a beaker or similar container containing the low concentration lithium-containing solution, and the solution is stirred for a predetermined time. This causes the low concentration lithium-containing solution and the lithium adsorbent to come into contact, and lithium is adsorbed on the lithium adsorbent.

When the shape of the lithium adsorbent constitutes particulate bodies, the particulate bodies containing the lithium adsorbent and the anion-exchange resin are sealed in the container for liquid passage, and the low concentration lithium-containing solution passes therethrough. Thus, the low concentration lithium-containing solution and the lithium adsorbent come into contact, and lithium is adsorbed on the lithium adsorbent.

When the lithium adsorbent is sprayed on the fibers of the column, the anion-exchange resin is enclosed in the column. As the low concentration lithium-containing solution passes through the column, the low concentration lithium-containing solution and the lithium adsorbent come into contact with each other, and lithium is adsorbed on the lithium adsorbent.

The above describes the contact method that is likely to be employed according to the shape of the lithium adsorbent, but the combination of the shape of the lithium adsorbent and the contact method is not limited to the above-described combination. For example, the method of feeding and stirring in the low concentration lithium-containing solution is employed for the particulate bodies containing the lithium adsorbent in some cases.

In any of the lithium adsorbent forms or the contact methods, the weight ratio of the anion-exchange resin to the lithium adsorbent is preferably to be 0.5 or more and 2.5 or less. In other words, the value obtained by dividing the "weight of the anion-exchange resin" by the "weight of the lithium adsorbent" is preferably to be 0.5 or more and 2.5 or less.

The weight ratio of the anion-exchange resin to the lithium adsorbent of 0.5 or more and 2.5 or less allows the pH in the adsorption step to be maintained at the high level while suppressing the amount of the anion-exchange resin.

After the adsorption step, the adsorbent becomes the post-adsorption lithium manganese oxide. The low concentration lithium-containing solution becomes a post-adsorption liquid after lithium is adsorbed by the adsorbent. This post-adsorption liquid is discharged into the sea or the lake where the low concentration lithium-containing solution was collected. At that time, the post-adsorption liquid is treated to a state suitable for discharge, such as by neutralization, before being discharged.

### (Eluting step)

In the eluting step, the post-adsorption lithium manganese oxide is brought into contact with the acid-containing solution to obtain the eluted solution by the reaction illustrated in Formula 8. In this case, the post-adsorption lithium manganese oxide is regenerated as the lithium adsorbent by the exchange reaction between the cations Li⁺ and H⁺, and this lithium adsorbent is used in the adsorption step again.

[Formula 8] Li_{1.6}Mn_{1.6}O₄ + 1.6HCl → H_{1.6}Mn_{1.6}O₄ + 1.6LiCl

In this embodiment, the acid-containing solution includes the solution of an acid alone, such as hydrochloric acid, and the eluted solution obtained by once having undergone the eluting step to which the acid is then added. For example, in this embodiment, the eluting step is divided into a plurality of stages. In the first stage, the acid-containing solution is a solution of the acid alone, and in the second and subsequent stages, the eluting solution obtained in the previous stage is used, and the second and subsequent stages are performed by adding the acid to this eluting solution, but this is not limited thereto. For example, only the solution of the acid alone is used as the acid-containing solution in some cases.

The hydrogen ion concentration of the acid-containing solution to be brought into contact with the post-adsorption lithium manganese oxide in the eluting step of this embodiment is preferably to be 0.1 mol/L or more and 4.0 mol/L or less. Furthermore, the hydrogen ion concentration is preferably to be 0.5 mol/L or more and 2.0 mol/L or less.

When the hydrogen ion concentration of the acid-containing solution is thinner than 0.1 mol/L, the exchange reaction between cations cannot be sufficiently carried out, and the efficiency of this exchange reaction is decreased. When the acid-containing solution is thicker than 4.0 mol/L, the entire lithium manganese oxide is dissolved in the acid solution, and the post-adsorption lithium manganese oxide cannot be used again as the lithium adsorbent. The acid used in the acid-containing solution is preferably, but not limited to, hydrochloric acid. For example, sulfuric acid or acetic acid is used in some cases.

The mode of contact between the post-adsorption lithium manganese oxide and the acid solution in the eluting step varies depending on the shape of the lithium manganese oxide. For example, when the lithium manganese oxide is in a form of powder, one method is to put a powder of the post-adsorption lithium manganese oxide into the acid solution and stir it to cause contact between the post-adsorption lithium manganese oxide and the acid solution. When the lithium manganese oxide constitutes particulate bodies or is sprayed on the fibers of the column, one method, in which the particulate lithium manganese oxide and the column are stored in the container for liquid passage, is to cause the acid solution to pass through the container for liquid passage to bring the post-adsorption lithium manganese oxide into contact with the acid solution.

When the shape of the post-adsorption lithium manganese oxide constitutes a powder or particulate bodies, it is preferred to separate the post-adsorption lithium manganese oxide and the anion-exchange resin in the eluting step in this embodiment. This is because the lithium adsorbent after having undergone the eluting step can be used again in the adsorption step. This separation is performed, for example, by sieving.

### (Manganese Oxidation Step)

In the manganese oxidation step, the oxidant and the pH adjuster are added to the eluted solution obtained in the eluting step to oxidize divalent manganese to tetravalent manganese, so as to obtain a lithium-containing solution with the suppressed manganese concentration. Since tetravalent manganese is hardly soluble, it precipitates in solution. This allows the manganese concentration in the eluted solution to be suppressed. Furthermore, the precipitated manganese can be reused as a raw material for the lithium adsorbent.

To oxidize divalent manganese to tetravalent manganese, the oxidant and the pH adjuster are added to the eluted solution. When the oxidant and the pH adjuster are added, the pH is preferably to be 3 or more and 7 or less, and the redox potential is preferably adjusted to be 600 mV or more and 1100 mV or less at a silver chloride electrode. In other words, the pH and the redox potential are measured simultaneously, and the oxidant and the pH adjuster are added simultaneously or alternately so that they fall within the above-described ranges. For example, sodium hypochlorite, sodium chlorite, ozone, and permanganate can be used as the oxidant. However, they are not limited thereto, there is no problem as long as the redox potential can be adjusted. An alkaline-neutralizing agent such as sodium hydroxide and slaked lime can be used as the pH adjuster. However, it is not limited thereto, and there is no problem as long as the pH can be adjusted.

### (Subsequent Stage of the Manganese Oxidation Step)

In the lithium-containing solution obtained in the manganese oxidation step, lithium is present in a form of lithium chloride (LiCl) in this embodiment. Thus, lithium can be obtained in a form of lithium carbonate, for example, by adding alkali to this solution or by superheating and concentrating it.

The post-adsorption lithium manganese oxide becomes the lithium adsorbent by the acid solution, and this lithium adsorbent is used in the adsorption step again.

### (Second Embodiment)

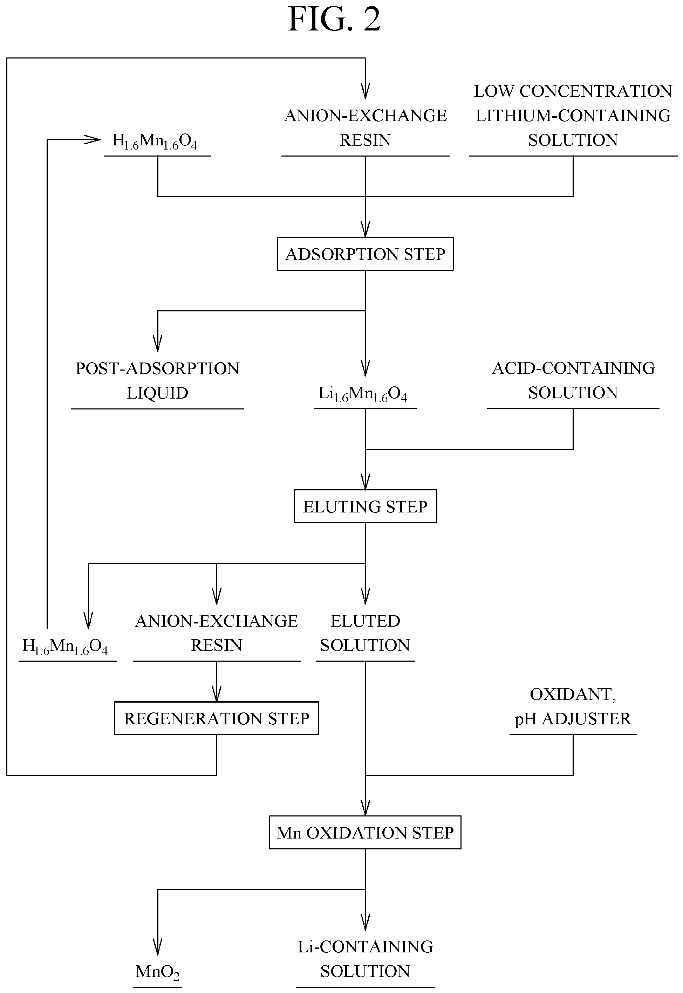

Fig. 2 illustrates a flow chart of a method for producing a lithium-containing solution according to a second embodiment of the invention. The difference between the first and second embodiments is that a regeneration step is provided for the anion-exchange resin that has been separated from the post-adsorption lithium manganese oxide after the eluting step. In the regeneration step, the functional group of the anion-exchange resin is returned to the form of the hydroxy group. The other points are the same as in the first embodiment. Therefore, only the differences are explained below, and other explanations are omitted.

### (Regeneration step)

Most anion-exchange resins used in the regeneration step have been in contact with the acid in the adsorption step and the eluting step, and therefore having absorbed the hydrogen ions. In this embodiment, the anion-exchange resin that has been separated from the post-adsorption lithium manganese oxide in the eluting step undergoes the regeneration step. In the regeneration step, the functional group of the anion-exchange resin is returned to the form of the hydroxy group, and the anion-exchange resin obtained through this regeneration step is used in the adsorption step.

The method of returning the functional group of the anion-exchange resin to the form of the hydroxy group is preferably performed by causing the anion-exchange resin separated in the eluting step to pass through an alkaline aqueous solution, such as sodium hydroxide aqueous solution, ammonia aqueous solution, or sodium carbonate aqueous solution. Formulae 9 to 12 illustrate the chemical reaction equations when the sodium hydroxide aqueous solution is used in the regeneration step.

[Formula 9] R-NH₂ + HCl + NaOH → R-NH₂ + NaCl + H₂O

[Formula 10] R₂-NH + HCl + NaOH → R₂-NH + NaCl + H₂O

[Formula 11] R₃-N + HCl + NaOH → R₃-N + NaCl + H₂O

[Formula 12] R₄-NCl + NaOH → R₄-NOH + NaCl

After the eluting step, the regeneration step is provided to return the functional group of the anion-exchange resin to the form of the hydroxy group. The anion-exchange resin having undergone the regeneration step is used in the adsorption step, thereby suppressing the cost increase due to the use of the anion-exchange resin.

The regeneration step may be performed with the anion-exchange resin and the lithium adsorbent mixed together. In other words, since the lithium adsorbent has no ability to adsorb metallic elements other than lithium, when the above-described alkaline aqueous solution does not contain lithium, the anion-exchange resin is regenerated while the lithium adsorbent maintains its adsorption ability without adsorbing any metallic element during the regeneration step. Thus, the lithium adsorbent can be used in the next adsorption step as it is. Similarly, when the alkaline aqueous solution contains some lithium and the adsorption ability of the lithium adsorbent has decreased, the lithium adsorbent can be used in the next adsorption step when the adsorption ability remains. When the alkaline aqueous solution contains a considerable amount of lithium (when saturation of the lithium adsorbent is a concern), the anion-exchange resin and the lithium adsorbent need to be separated in the eluting step. The separation method may include sieving.

### Examples

Specific examples of the method for producing a lithium-containing solution according to the present invention are described below, but the invention is not limited to these examples.

### <Example 1>

### (Adsorption step)

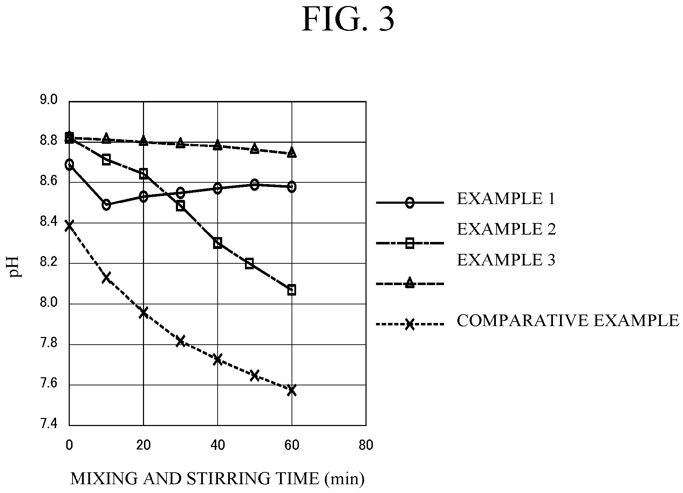

10 grams of powdered lithium adsorbent H_{1.6}Mn_{1.6}O₄ was mixed with 20 grams of a weakly basic anion-exchange resin (A830W: manufactured by Purolite K.K.). In this case, the weight ratio of the anion-exchange resin to the lithium adsorbent is 2. This mixture was added to a beaker of 1 L capacity containing 400 mL of salt lake brine adjusted to pH 8.5 and stirred and mixed for 60 minutes to perform the adsorption step. The analytical values of the salt lake brine used in this adsorption step are illustrated in Table 1. The pH was measured every 10 minutes from the start of the stirring and mixing until 60 minutes. The results are illustrated in Table 2 and Fig. 3. A predetermined amount of a solution was also collected from the beaker every 10 minutes.

### (Eluting step)

The post-adsorption lithium manganese oxide present in the solution whose pH had been measured was brought into contact with the acid-containing solution. The acid-containing solution was hydrochloric acid with a hydrogen ion concentration of 0.5 mol/L only. In this case, the pH of the acid-containing solution was 0.4. All solutions that flowed out of the column were mixed to make a uniform solution.

### (Manganese Oxidation Step)

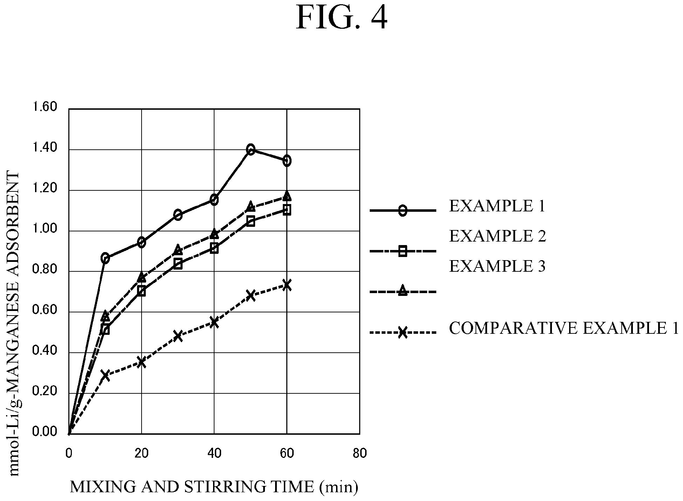

The manganese oxidation step was performed using a second eluted solution. In this case, the oxidant and the pH adjuster were used to obtain a lithium-containing solution. Lithium amounts contained in the lithium-containing solution is illustrated in Table 3 and Fig. 4.

### <Example 2>

The difference between Example 1 and Example 2 is that the anion-exchange resin in the adsorption step is 10 g of a strongly basic anion-exchange resin (DIAION SA10A: manufactured by Mitsubishi Chemical Corporation). Other parameters are the same as those in Example 1. The pH was measured every 10 minutes from the start of the stirring and mixing until 60 minutes. The results are illustrated in Table 2 and Fig. 3. Lithium amounts contained in the lithium-containing solution obtained through the manganese oxidation step is also illustrated in Table 3 and Fig. 4.

### <Example 3>

The difference between Example 1 and Example 3 is that the anion-exchange resin in the adsorption step is 20 g of strongly basic anion-exchange resin (DIAION SA10A: manufactured by Mitsubishi Chemical Corporation). Other parameters are the same as those in Example 1. The pH was measured every 10 minutes from the start of the stirring and mixing until 60 minutes. The results are illustrated in Table 2 and Fig. 3. Lithium amounts contained in the lithium-containing solution obtained through the manganese oxidation step is also illustrated in Table 3 and Fig. 4.

### <Comparative Example 1>

The difference between Example 1 and Comparative Example 1 is that any anion-exchange resin was not used in the adsorption step. Other parameters are the same as those in Example 1. The pH was measured every 10 minutes from the start of the stirring and mixing until 60 minutes. The results are illustrated in Table 2 and Fig. 3. Lithium amounts contained in the lithium-containing solution obtained through the manganese oxidation step is also illustrated in Table 3 and Fig. 4.

**[Table 1]**

| Element name | Li | K | Mg | Na | Ca |
|---|---|---|---|---|---|
| Contained amount [g/L] | 0.86 | 9.3 | 7.8 | 96 | 11 |

**[Table 2]**

| Stirring time | 0 | 10 | 20 | 30 | 40 | 50 | 60 |
|---|---|---|---|---|---|---|---|
| Example 1 | 8.69 | 8.49 | 8.53 | 8.55 | 8.57 | 8.59 | 8.58 |
| Example 2 | 8.82 | 8.72 | 8.65 | 8.49 | 8.31 | 8.19 | 8.08 |
| Example 3 | 8.82 | 8.81 | 8.80 | 8.79 | 8.78 | 8.76 | 8.74 |
| Comparative Example 1 | 8.39 | 8.13 | 7.96 | 7.82 | 7.73 | 7.65 | 7.58 |

**[Table 3]**

| Stirring time | 0 | 10 | 20 | 30 | 40 | 50 | 60 |
|---|---|---|---|---|---|---|---|
| Example 1 | 0.00 | 0.86 | 0.94 | 1.08 | 1.15 | 1.40 | 1.34 |
| Example 2 | 0.00 | 0.52 | 0.71 | 0.85 | 0.93 | 1.06 | 1.12 |
| Example 3 | 0.00 | 0.58 | 0.77 | 0.91 | 0.98 | 1.12 | 1.17 |
| Comparative Example 1 | 0.00 | 0.29 | 0.36 | 0.48 | 0.55 | 0.68 | 0.73 |

Fig. 3 illustrates that in Example 1 and Example 3, there is almost no difference in pH between the beginning and the end of the stirring and mixing. Also, for Example 2, the pH remained above 8.0 even after 60 minutes of the stirring and mixing, indicating that there was little decrease in the pHs compared with the comparative example. Fig. 4 also illustrates that after 60 minutes of the stirring and mixing, lithium of 1.0 mmol/g (manganese adsorbent) or more was adsorbed in all the cases. In contrast, the adsorption in the adsorption step was not sufficient and only 0.8 mmol/g (manganese adsorbent) of lithium was obtained in the comparative example.

## Claims

1. A method for producing a lithium-containing solution, comprising:
an adsorption step of bringing a low concentration lithium-containing solution into contact with a lithium adsorbent obtained from lithium manganese oxide to obtain post-adsorption lithium manganese oxide;
an eluting step of bringing the post-adsorption lithium manganese oxide into contact with an acid-containing solution to obtain an eluted solution; and
a manganese oxidation step of oxidating manganese by adding an oxidant and a pH adjuster to the eluted solution to obtain a lithium-containing solution with a suppressed manganese concentration, wherein
the adsorption step, the eluting step, and the manganese oxidation step are performed in this order, and
in the adsorption step, an anion-exchange resin is used together with the lithium adsorbent.

2. The method for producing a lithium-containing solution according to claim 1, wherein
a weight ratio of the anion-exchange resin to the lithium adsorbent is 0.5 or more and 2.5 or less.

3. The method for producing a lithium-containing solution according to claim 1 or 2, wherein
the lithium adsorbent constitutes particulate bodies, and
the particulate body contains binder.

4. The method for producing a lithium-containing solution according to any one of claims 1 to 3, wherein
after the eluting step, a regeneration step is provided to return a functional group of the anion-exchange resin to a form of hydroxy group thereof, and
the anion-exchange resin having undergone the regeneration step is used in the adsorption step.
